# EUROPEAN PATENT SPECIFICATION

(11) **EP 3 219 230 B1**
(45) Date of publication and mention of the grant of the patent: **05.12.2018**
(21) Application number: 17159792.5
(22) Date of filing: 08.03.2017
(51) Int. Cl.: A47J 31/06

(54) **CAPSULE HOLDER**
KAPSELHALTERUNG
PORTE-CAPSULES

(30) Priority: 08.03.2016 IT UA20161450
(43) Date of publication of application: 20.09.2017
(73) Proprietor: Capitani S.r.l., 22070 Solbiate (CO) (IT)
(72) Inventor: CAPITANI, Gionata, 22070 Albiolo (CO) (IT)
(74) Representative: Parisi, Luigi

(56) References cited:
- EP-A1- 2 907 425
- WO-A1-2008/006297
- WO-A1-2015/101557
- US-A1- 2010 018 401
- US-A1- 2014 340 078

## Description

The present invention concerns a capsule container for producing an infused beverage by an infusion assembly operating with a capsule or pod containing an aromatic substance. According to the preamble of claim 1, the capsule container is of the type delimiting a capsule housing compartment adapted to receive a capsule or pod by shape coupling therewith and having a bottom wall in which at least one output passage for the infused beverage is obtained. Such a capsule container is known from US2010/0018401.

The present invention is particularly suitable for being applied to a capsule adapter that can be inserted in the female infuser of an infusion assembly to use capsules of different size or shapes, for example of the type described in the Application No. EP3114970 in the name of the same Applicant, or to a capsule-holder with a handle adapted to be connected to a machine for producing an infused beverage.

A problem of these adapters and capsule-holder, which is particularly evident in case of capsules having high volumes, for example 14 g product grammage, is that when the infusion assembly is opened for extracting the used capsule, air enters the infusion chamber and causes the beverage to leak out from the machine hopper or the capsule-holder.

Object of the present invention is to propose a capsule container, in particular an adapter or a capsule-holder, able to obviate the above reported drawback.

Said object is achieved by a capsule container according to claim 1 and an infusion assembly according to claim 11. The dependent claims describe preferred embodiments of the capsule container.

Further characteristics and advantages of the invention will be anyway apparent from the following description of some preferred embodiments, given for illustration purposes and without limitation, with reference to the accompanying drawings, in which:
- figure 1 is a perspective cut-away view of a capsule adapter according to the invention;
- figure 2 is an axial sectional view of the adapter of figure 1 without capsule;
- figure 3 is a perspective cut-away view of the adapter with a partially inserted capsule;
- figure 4 is an axial sectional view of the adapter with a completely inserted capsule;
- figures 5-8 are views similar to the preceding ones of an adapter for capsules in an embodiment variation;
- figure 9 is a sectional view only of the valve member of the adapter of figures 5-8;
- figure 10 is a perspective view of an adapter according to the invention during the insertion step in an infusion assembly of a machine for the delivery of an infused beverage; and

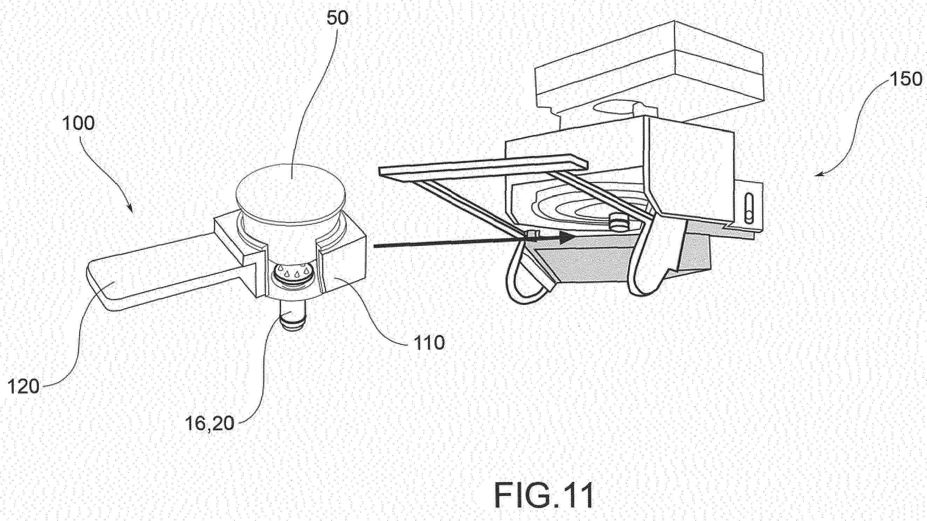

- figure 11 is a perspective view of a capsule-holder according to the invention, the capsule being partially inserted, and a respective delivery machine of an infused beverage.

During the following description, common elements of the various embodiments of the invention are denoted with the same reference numerals.

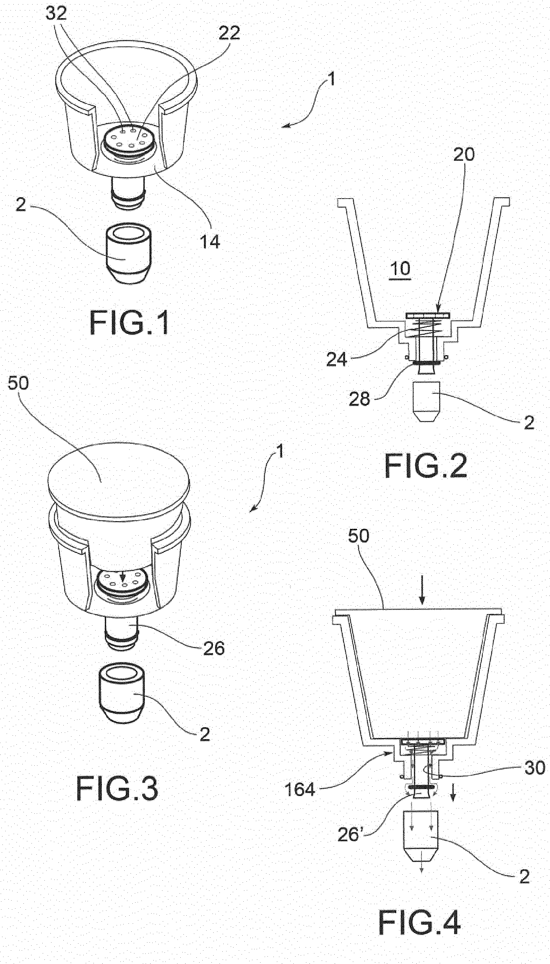

Referring to figures 1-10, numeral 1 denotes a capsule adapter adapted to be used with an infusion assembly 200 for machines of the type employing capsules or pods containing aromatic essences.

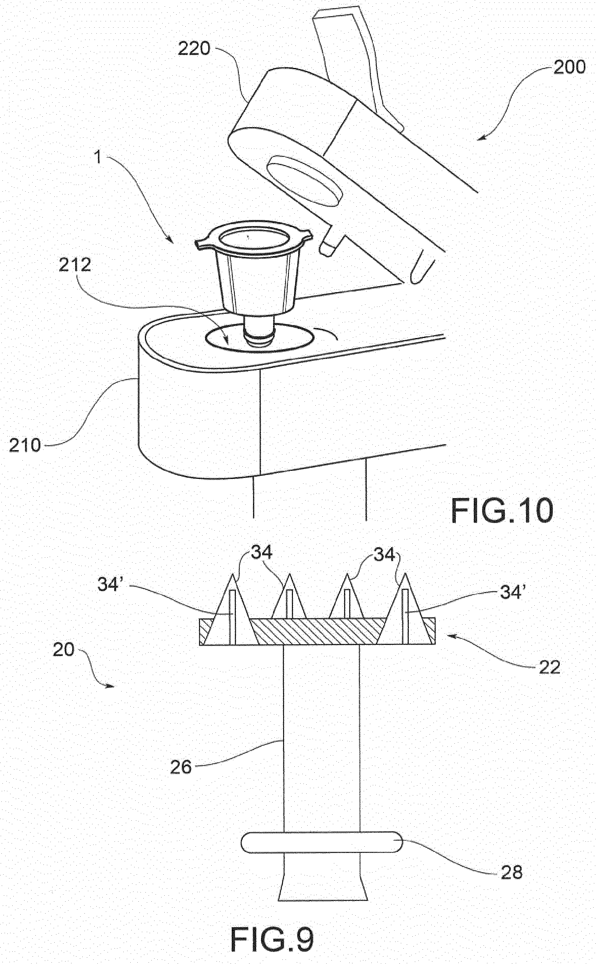

Figure 10 shows an example of an infusion assembly 200. Usually, an infusion assembly 200 comprises a female infuser 210 defining an infusion chamber 212 adapted to house a capsule or pod for the production of an infused beverage, and a male infuser 220 adapted to cooperate with the female infuser 210 for closing the infusion chamber 212 at least partially.

At least one of the male 220 and female 210 infusers is a movable infuser. The movable infuser, in the shown embodiment being for example the male infuser 220, is movable between an open position and a closed position of the infusion chamber 212.

In the example depicted in figure 10, the female infuser 210 is obtained in a fixed part of the frame, whereas the male infuser 220 is obtained in a movable part hinged at the fixed part so that to be rotatable between a lowered position closing the infusion chamber 212 and a raised position opening the chamber 212.

The adapter 1 can be inserted in the female infuser 210 and is adapted to accommodate a capsule or pod 50. The capsule or pod 50 that can be inserted in the female adapter 210 can have smaller size than the capsule or pod provided for the female infuser, or it can have the same size but is usable with a different infusion technique.

Then the adapter 1 delimits a capsule housing compartment 10 adapted to receive a capsule or pod 50 by shape coupling therewith. In an embodiment, the adapter 1 generally has truncated-conical or cylindrical shape.

The adapter 1 has a bottom wall 14 in which at least one output passage 16 for the infused beverage is obtained. The output passage 16 is adapted to fluidically communicate with a hopper 2 through which the infused beverage is delivered.

The output passage 16 is engaged by a valve member 20 axially translatable between a closed position of the output passage 16, when there is no capsule 50 in the housing compartment 10, and an open position of the output passage 16 when there is a capsule in the housing compartment.

When the valve member 20 is in the closed position, no liquid passes to the hopper 2.

In a preferred embodiment, the valve member 20 is elastically biased so that is remains in the closed position. In other words the valve member 20, when no force is acting thereon, stays or comes back to the closed position.

In an embodiment, the valve member 20 comprises a plate 22. For example, the plate 22 is disc-shaped.

When there is no capsule, the plate 22 is elastically biased to a forward position with respect to the bottom wall 14 in the housing compartment 10.

For example, the plate 22 extends in a plane parallel to that of the bottom wall 14. Preferably, the plate 22 extends in a plane parallel to that of the bottom wall 14, so that to be axially spaced from the bottom wall 14.

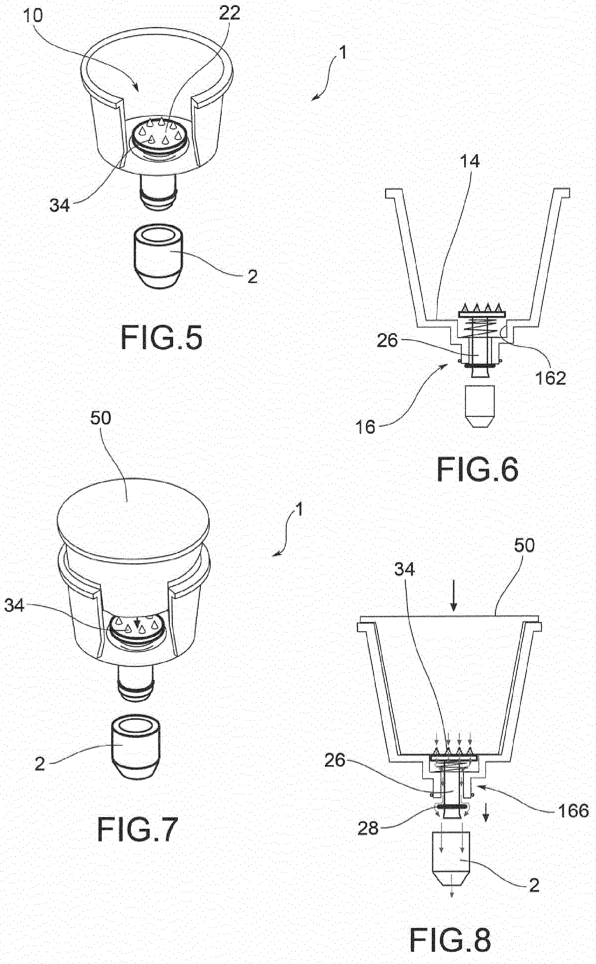

In an embodiment, when the valve member 20 is in the closed position (figures 2 and 6), the plate 22 is raised with respect to the bottom wall 14. When the valve member 20 is in the open position (figures 4 and 8), the plate 22 is coplanar to the bottom wall 14.

In an embodiment, in the output passage 16 a spring seat 162 is obtained in which a spring 24 acting on the plate 22 is placed, for example a cylindrical or truncated-conical spring. The spring 24 can be compressed so that to allow the plate 22 to move back from the forward position to a rearward position, i.e. a coplanarity position, of alignment with the bottom wall 14 (figures 4 and 8).

Therefore, in a preferred embodiment, the displacement of the valve member 20 to the rearward position opening the output passage 16 is due to the capsule 50 itself when, the latter having been inserted in the housing compartment 10, the infusion assembly 200 is closed and the capsule 50 is pushed to abutment against the bottom wall 14 of the housing compartment 10.

In an embodiment, the valve member 20 comprises a stem 26 extending in the output passage 16 and supporting, at a free end thereof, a sealing element 28, for example an O-ring, adapted to seal the output passage 16.

In an embodiment, the stem 26 extends from the plate 22 and has a free end 26' protruding from the output passage 16.

The stem 26 is movable with the plate 22 between a rearward position, in which the sealing element 28 engages the output passage 16, and a forward position, in which the sealing element 28 disengages from the output passage 16, thus allowing the passage of the infused beverage.

In an embodiment, the stem 26 is coaxial to the output passage 16 and forms, with the inner wall of this output passage 16, an annular output chamber 30 through which the infused beverage passes before reaching the hopper 2.

In an embodiment, the output passage 16 comprises a first portion 164 open towards the housing compartment 10, which forms the spring seat 162 and has, at least next to its opening to the capsule housing compartment 10, a perimeter corresponding to the plate 22 one.

The output passage 16 further comprises a second portion 166 open towards the hopper 2, which has a cross section underneath the first portion, so that a rest plane of the spring 24 is formed between the first and the second portions.

In an embodiment, the spring 24 is positioned around a proximal portion of the stem 26. According to an embodiment depicted in figures 1-4, the plate 22 has one or more through-holes 32 for the passage of the infused beverage.

In an embodiment depicted in figures 1-4, the plate 22 provided with the holes 32 has diameter equal to that of the first portion 162 of the output passage 16; the infused beverage being in the infusion chamber enters the output passage 16 when the valve member is in the open position through the holes 32 in the plate 22.

In an embodiment depicted in figures 5-9, the plate 22 is provided, in addition or as an alternative to the holes 32, with tips 34 for piercing the capsule 50 and allowing the output of the infused beverage or the input of the infusion beverage in the capsule 50, if the latter is not provided with apposite holes intended for such a function.

In an embodiment the tips 34 are hollow, cross the whole thickness of the plate 22 and, in their conical portion, one or more openings 34' are obtained, for example having the shape of longitudinal slits, for example three slits angularly spaced from one another, which allow the passage of the infused beverage from the capsule 50 to the output passage 16, as depicted by the arrows of figure 8, and which can also have the function of beverage filtration by holding the substance powders inside the capsule 50.

Figure 10 shows a capsule-holder 100 adapted to accommodate a capsule 50 and to be connected to the machine 150 for the delivery of an infused beverage.

The capsule-holder 100 has a capsule container 110 having the same structure of the afore described adapter 1.

Therefore, the capsule container 110 delimits a capsule housing compartment 10 having a bottom wall 14, in which the at least one output passage 16 of the infused beverage is obtained and the afore described valve member 20 engages.

The capsule-holder 100, for its hand manipulation, is equipped with a side handle 120 to be gripped.

Although the present invention is particularly effective when applied to a capsule adapted 1 or a capsule-holder 100, it is evident that the output passage 1' combined with the valve member, as all described above, can be implemented directly in a infusion assembly 200. In this case, the output passage is in fluidic communication with the infusion chamber in which the capsule or pod is inserted.

In any case, thanks to the valve member 20, the not-controlled leakage of the beverage from the adapter, capsule-holder or infusion chamber during the opening of the infusion assembly to draw out the used capsule or to remove the capsule-holder from the machine, is stopped.

Moreover the plate, elastically urged to come back to the position raised with respect to the bottom wall of the capsule housing compartment, aids the capsule extraction from this housing compartment when the infusion assembly is opened.

To satisfy contingent needs a person skilled of the art can make changes, adaptations and element substitutions with other equivalent ones to the embodiments of the capsule container according to the invention, without departing from the scope of the following claims. Each features described as belonging to a possible embodiment can be implemented independently from the other described embodiments.

## Claims

1. Capsule container for producing an infused beverage by an infusion assembly operating with a capsule or pod (50) containing an aromatic substance, said capsule container delimiting a housing compartment (10) to house the capsule, the housing compartment being adapted to receive a capsule or pod (50) by shape coupling therewith and having a bottom wall (14) in which at least one output passage (16) for the infused beverage is obtained, said output passage (16) is engaged by a valve member (20) axially translatable between a closed position of the output passage, when there is no capsule in the housing compartment, and an open position of the output passage when there is a capsule in the housing compartment: **characterized in that** said valve member (20) comprises a plate (22) that, when there is no capsule, is elastically biased to a forward position in which it protrudes with respect to the bottom wall (14) in the housing compartment (10).

2. Capsule container according to claim 1, wherein said valve member (20) is elastically biased so that it remains in the closed position.

3. Capsule container according to claim 1 or 2, wherein in the output passage (16) a spring seat (162) is obtained in which a spring (24) acting on the plate (22) is positioned, said spring being compressible so that to allow the plate to move back from the forward position to a rearward position aligned with the bottom wall.

4. Capsule container according to any one of preceding claims 1 to 3, wherein said valve member (20) comprises a stem (26) extending in the output passage and supporting, at a free end thereof, a sealing element (28) adapted to close the output passage.

5. Container according to claim 4, wherein said stem (26) extends from the plate and has the free end protruding from the output passage (16), the stem being movable with the plate between a rearward position, in which the sealing element (28) engages the output passage and blocks it, and a forward position, in which the sealing element (28) disengages from the output passage (16).

6. Capsule container according to any one of preceding claims 1 to 5, wherein the plate (22) has one or more through-holes (32) for the passage of the infused beverage from the capsule (50) to the output passage (16).

7. Capsule container according to any one of preceding claims 1 to 6, wherein the plate (22) is provided with piercing tips (34) to pierce the capsule.

8. Capsule container according to claim 7 wherein openings (34'), which are shaped to allow the passage of the infused beverage or an infusion beverage through the plate (22), cross said piercing tips (34).

9. Capsule container according to any one of preceding claims 1 to 8, adapted to be inserted in a female infuser (210) cooperating with a male infuser (220) in an infusion assembly (200) of a machine for producing and delivering an infused beverage.

10. Container according to any one of preceding claims 1 to 8, comprising a side handle (120) to be gripped for the application and the removal of the former to/from the infuser of a vertical machine (150) for producing an infused beverage.

11. Infusion assembly for producing an infused beverage from a capsule, comprising a female infuser (210) defining an infusion chamber (212) adapted to house a capsule or pod for the production of an infused beverage, and a male infuser (220) adapted to cooperate with the female infuser for closing said chamber at least partially, wherein said infusion chamber is made to have a capsule container (1) according to any one of the preceding claims.

## Patentansprüche

1. Kapselbehälter zum Erzeugen eines aufgegossenen Getränks mittels einer Aufgussanordnung, welche mit einer eine aromatische Substanz enthaltenden Kapsel oder einem Pad (50) betrieben wird, wobei der Kapselbehälter ein Gehäusefach (10) zum Unterbringen der Kapsel begrenzt, wobei das Gehäusefach zur Aufnahme der Kapsel oder des Pads (50) über eine Formpaarung mit dieser/diesem eingerichtet ist und eine Bodenwand (14) aufweist, in welcher mindestens ein Ausgabekanal (16) für das aufgegossene Getränk erhalten wird, wobei der Ausgabekanal (16) mit einem Ventilelement (20) in Eingriff steht, welches zwischen einer geschlossenen Position des Ausgabekanals, wenn sich keine Kapsel im Gehäusefach befindet, und einer offenen Position des Ausgabekanals, wenn sich eine Kapsel im Gehäusefach befindet, axial verschiebbar ist, **dadurch gekennzeichnet, dass** das Ventilelement (20) eine Platte (22) umfasst, welche, wenn keine Kapsel vorhanden ist, elastisch in eine vordere Position vorgespannt ist, in der sie bezüglich der Bodenwand (14) ins Gehäusefach (10) hineinragt.

2. Kapselbehälter gemäß Anspruch 1, wobei das Ventilelement (20) elastisch so vorgespannt ist, dass es in der geschlossenen Position verbleibt.

3. Kapselbehälter gemäß Anspruch 1 oder 2, wobei im Ausgabekanal (16) ein Federsitz (162) erhalten wird, in dem eine auf die Platte (22) wirkende Feder (24) angeordnet ist, wobei die Feder zusammendrückbar ist, um zu ermöglichen, dass sich die Platte von der vorderen Position in eine mit der Bodenwand ausgerichtete, hintere Position zurückbewegt.

4. Kapselbehälter gemäß einem der vorhergehenden Ansprüche 1 bis 3, wobei das Ventilelement (20) einen Schaft (26) umfasst, welcher sich in den Ausgabekanal erstreckt und an seinem freien Ende ein zum Verschließen des Ausgabekanals eingerichtetes Dichtelement (28) trägt.

5. Behälter gemäß Anspruch 4, wobei sich der Schaft (26) von der Platte aus erstreckt und das freie Ende aus dem Ausgabekanal (16) hervorragt, wobei der Schaft mit der Platte bewegbar ist zwischen einer hinteren Position, in welcher das Dichtelement (28) mit dem Ausgabekanal in Eingriff kommt und diesen blockiert, und einer vorderen Position, in welcher das Dichtelement (28) mit dem Ausgabekanal (16) außer Eingriff kommt.

6. Kapselbehälter gemäß einem der vorhergehenden Ansprüche 1 bis 5, wobei die Platte (22) ein oder mehrere Durchtrittslöcher (32) für den Durchtritt des aufgegossenen Getränks von der Kapsel (50) zum Ausgabekanal (16) aufweist.

7. Kapselbehälter gemäß einem der vorhergehenden Ansprüche 1 bis 6, wobei die Platte (22) mit Durchstechspitzen (34) zum Durchstechen der Kapsel ausgebildet ist.

8. Kapselbehälter gemäß Anspruch 7, **dadurch gekennzeichnet, dass** Öffnungen (34'), welche zum Durchtreten des aufgegossenen Getränks oder eines Aufgussgetränks durch die Platte (22) geformt sind, die Durchstechspitzen (34) kreuzen.

9. Kapselbehälter gemäß einem der vorhergehenden Ansprüche 1 bis 8, eingerichtet zum Einsetzen in eine weibliche Aufbrühvorrichtung (210), welche mit einer männlichen Aufbrühvorrichtung (220) in einer Aufgussanordnung (200) einer Vorrichtung zum Erzeugen und Abgeben eines aufgegossenen Getränks zusammenwirkt.

10. Behälter gemäß einem der vorhergehenden Ansprüche 1 bis 8, umfassend einen Seitengriff (120) zum Ergreifen für das Einsetzen und das Entfernen des Vorgenannten in die/von der Aufgussanordnung einer vertikalen Vorrichtung (150) zum Erzeugen eines aufgegossenen Getränks.

11. Aufgussanordnung zum Erzeugen eines aufgegossenen Getränks aus einer Kapsel, umfassend eine weibliche Aufbrühvorrichtung (210), welche eine zur Aufnahme einer Kapsel oder eines Pads zum Erzeugen eines aufgegossenen Getränks eingerichtete Aufgusskammer (212) definiert, und eine männliche Aufbrühvorrichtung (220), eingerichtet zum Zusammenwirken mit der weiblichen Aufbrühvorrichtung, um die Kammer wenigstens teilweise zu verschließen, wobei die Aufgusskammer so ausgestaltet ist, dass sie einen Kapselbehälter (1) gemäß einem der vorhergehenden Ansprüche aufweist.

## Revendications

1. Contenant de capsule pour produire une boisson infusée par un ensemble d'infusion fonctionnant avec une capsule ou une dosette (50) contenant une substance aromatique, ledit contenant de capsule délimitant un compartiment de logement (10) pour loger la capsule, le compartiment de logement étant adapté pour recevoir une capsule ou une dosette (50) par accouplement de forme avec celle-ci et ayant une paroi de dessous (14) dans laquelle au moins un passage de sortie (16) pour la boisson infusée est obtenu, ledit passage de sortie (16) est engagé par un organe de soupape (20) translatable axialement entre une position fermée du passage de sortie, lorsqu'il n'y a pas de capsule dans le compartiment de logement, et une position ouverte du passage de sortie lorsqu'il y a une capsule dans le compartiment de logement;
**caractérisé en ce que** ledit organe de soupape (20) comprend une plaque (22) qui, lorsqu'il n'y a pas de capsule, est sollicitée élastiquement vers une position vers l'avant dans laquelle elle fait saillie par rapport à la paroi de dessous (14) dans le compartiment de logement (10).

2. Contenant de capsule selon la revendication 1, dans lequel ledit organe de soupape (20) est sollicité élastiquement de sorte qu'il reste dans la position fermée.

3. Contenant de capsule selon la revendication 1 ou 2, dans lequel dans le passage de sortie (16), un siège de ressort (162) est obtenu dans lequel un ressort (24) agissant sur la plaque (22) est positionné, ledit ressort étant compressible de façon à permettre à la plaque de se déplacer à nouveau de la position vers l'avant à une position vers l'arrière alignée avec la paroi de dessous.

4. Contenant de capsule selon l'une quelconque des revendications 1 à 3 précédentes, dans lequel ledit organe de soupape (20) comprend une tige (26) s'étendant dans le passage de sortie et supportant, au niveau d'une extrémité libre de celle-ci, un élément d'étanchéité (28) adapté pour fermer le passage de sortie.

5. Contenant selon la revendication 4, dans lequel ladite tige (26) s'étend depuis la plaque et a l'extrémité libre faisant saillie depuis le passage de sortie (16), la tige étant mobile avec la plaque entre une position vers l'arrière, dans laquelle l'élément d'étanchéité (28) s'engage avec le passage de sortie et le bloque, et une position vers l'avant, dans laquelle l'élément d'étanchéité (28) se dégage du passage de sortie (16).

6. Contenant de capsule selon l'une quelconque des revendications 1 à 5 précédentes, dans lequel la plaque (22) comporte un ou plusieurs trous traversants (32) pour le passage de la boisson infusée de la capsule (50) au passage de sortie (16).

7. Contenant de capsule selon l'une quelconque des revendications 1 à 6 précédentes, dans lequel la plaque (22) est pourvue de pointes perçantes (34) pour percer la capsule.

8. Contenant de capsule selon la revendication 7, dans lequel des ouvertures (34'), qui sont formées pour permettre le passage de la boisson infusée ou d'une boisson d'infusion à travers la plaque (22), croisent lesdites pointes perçantes (34).

9. Contenant de capsule selon l'une quelconque des revendications 1 à 8 précédentes, adapté pour être inséré dans un infuseur femelle (210) coopérant avec un infuseur mâle (220) dans un ensemble d'infusion (200) d'une machine pour produire et délivrer une boisson infusée.

10. Contenant selon l'une quelconque des revendications 1 à 8 précédentes, comprenant une poignée latérale (120) à saisir pour l'application du premier à l'infuseur d'une machine verticale (150) pour produire une boisson infusée et son enlèvement de celui-ci.

11. Ensemble d'infusion pour produire une boisson infusée à partir d'une capsule, comprenant un infuseur femelle (210) définissant une chambre d'infusion (212) adaptée pour loger une capsule ou une dosette pour la production d'une boisson infusée, et un infuseur mâle (220) adapté pour coopérer avec l'infuseur femelle pour fermer ladite chambre au moins partiellement, dans lequel ladite chambre d'infusion est faite pour avoir un contenant de capsule (1) selon l'une quelconque des revendications précédentes.
